# EUROPEAN PATENT SPECIFICATION

(11) **EP 1 568 596 B1**
(45) Date of publication and mention of the grant of the patent: **11.07.2007**
(21) Application number: 04425127.0
(22) Date of filing: 27.02.2004
(51) Int. Cl.: B62M 25/08

(54) **Powered actuator for a bicycle gearshift, with a controlled friction mechanism**
Motorisierter Aktuator für Fahrradgangschaltung, mit kontrolliertem Reibungsmechanismus
Actionneur motorisé pour dérailleur de bicyclette, avec mécanisme de commande de friction

(43) Date of publication of application: 31.08.2005
(73) Proprietor: CAMPAGNOLO S.R.L., I-36100 Vicenza (IT)
(72) Inventor: Meggiolan, Mario, 36051 Creazzo (Vincenza) (IT)
(74) Representative: Castiglia, Paolo

(56) References cited:
- EP-A- 1 103 456
- EP-A- 1 357 023
- US-A- 5 480 356
- US-A- 5 528 951

## Description

The present invention refers to an actuator for a bicycle gearshift, i.e. to a mechanical device which causes the displacement of the chain between different toothed wheels, for such a purpose displacing a derailleur by which the chain is guided.

In the context of this patent description and of the subsequent claims, the gearshift to which reference is made can indifferently be the rear one, which displaces the chain between the different sprockets associated with the rear wheel of the bicycle, or the front one, which displaces the chain between the different crowns associated with the cranks.

Normally, the actuator device of the gearshift comprises an articulated quadrilateral mechanism (typically an articulated parallelogram mechanism) with four connecting rods hinged together according to four pin axes by four pin elements, in which the first connecting rod is fixed integrally to the bicycle frame, the second connecting rod (opposite the first connecting rod in the articulated quadrilateral) is fixed to a support for the derailleur of the gearshift; the deformation of the articulated quadrilateral determines the displacement of the derailleur and thus the gearshifting.

The aforementioned deformation of the articulated quadrilateral can be obtained with manual actuation, through the movement of control levers transmitted to the actuator through a Bowden cable, or else with powered actuation, thanks to an electric motor which - following a suitable command imparted by the cyclist and through a suitable mechanism - displaces different parts of the articulated quadrilateral with respect to each other, deforming it and thus displacing the derailleur. Actuators with powered actuation are described for example in EP-A-1357023 (which describes an actuator device according to the preamble of claim 1); in them, the mechanism acts by moving opposite pins of the articulated quadrilateral towards and away from each other.

A constant aim of producers of gearshifts is that of improving the precision of actuation, upon which depends the ease and reliability of operation of the gearshift. This requirement is clearly all the more necessary the more the gearshift is intended to be used in high level cycling competitions. The adoption of electric motor members makes such a requirement even more necessary, because the deformation action in such a case is very direct, without the mediation of the Bowden cable.

Furthermore, the attention of the Applicant itself has been focused upon avoiding that in normal use the performance of a gearshift with a powered actuator be jeopardised by even small damage, which are often a non-visible consequence of knocks undergone by the gearshift itself. For such a purpose, it has been provided to insert a preloaded spring in the mechanism, such as to behave like a rigid body up to a certain stress limit (typical of the normal operation of the gearshift) and to elastically yield under anomalous greater stresses, at the same time ensuring the elastic return into the starting position; in this respect, see the co-pending European patent application to the same Applicant n° 03425534.9.

The inventors realised that sometimes the good operation of gearshifts with a powered actuator is disturbed by small displacements in the actuation mechanism that accidentally and spontaneously occur between screw and nut due to vibrations or knocks, above all in transportation step but also during riding, when a gear ratio is stably inserted. The aforementioned displacements alter the calibration conditions of the actuator, making gearshifting difficult if not impossible, unless a new calibration is performed.

The problem at the basis of the present invention is that of avoiding or at least reducing - in a simple and effective manner - the possibility of accidental displacements of the actuation mechanism of a gearshift with powered actuation.

Such a problem is solved with an actuator according to claim 1. Preferred characteristics are indicated in the dependent claims.

In particular, the present invention concerns an actuator device for a bicycle gearshift, comprising
- an articulated quadrilateral mechanism with four connecting rods hinged together by four pin elements, in which the first connecting rod is intended to be fixed integrally to a bicycle frame, the second connecting rod is opposite the first connecting rod in the articulated quadrilateral and is intended to be fixed to a support for a derailleur of the gearshift;
- a motor member, having a variable length according to a drive axis and acting between two opposite pin elements to move them towards and away from each other deforming the articulated quadrilateral;
in which the motor member comprises an electric motor housed on a support mounted on a first of the pin elements, a screw arranged axially along the drive axis and moved in rotation by the electric motor, a nut in mesh engagement with the screw and fixed to a second of the pin elements opposite the first,
characterised in that it comprises friction control means between the screw and the nut so as to have a friction between the screw and the nut that is both sufficiently high as to effectively brake spontaneous displacements between the screw and the nut due to vibrations to which the bicycle is subjected, and sufficiently low as not to substantially impede normal operation of the actuator.

A controlled friction between screw and nut allows spontaneous accidental movements between them to be impeded and in most cases prevented. Such friction shall preferably be significant but low; by significant it is meant that it has a value sufficiently high as to effectively brake the displacements that can be induced spontaneously between screw and nut due to vibrations to which the bicycle is subjected; by low it is meant that it has a value sufficiently low as not to substantially impede the normal operation of the actuator.

Such friction can be obtained in different ways, for example with surface treatment of the screw and/or of the nut, such as knurling or the like, or else with a friction control material with a predetermined friction coefficient, applied between the screw and the nut.

Preferably, the friction control means comprise an elastic element acting on one of the screw and the nut to angularly force the screw and the nut one with respect to the other. The action of such an elastic element is such as to create local pressure stresses between the screw and the nut, with a consequent increase in friction between them. More preferably said elastic element is a spring, even more preferably a preloaded spring; the preloading of the spring together with its substantially negligible elongation ensures that the pressure between screw and nut is kept substantially constant, so as to ensure friction and therefore a braking effect that are likewise constant.

Further characteristics and advantages of the invention shall become clearer from the following description of a preferred embodiment thereof, made with reference to the attached drawings. In such drawings:
- figure 1 is a perspective view of an actuator according to the invention;
- figure 2 is an exploded perspective view of some parts of the actuator of figure 1;
- figure 3 is an exploded view of a detail of the actuator of figure 1.

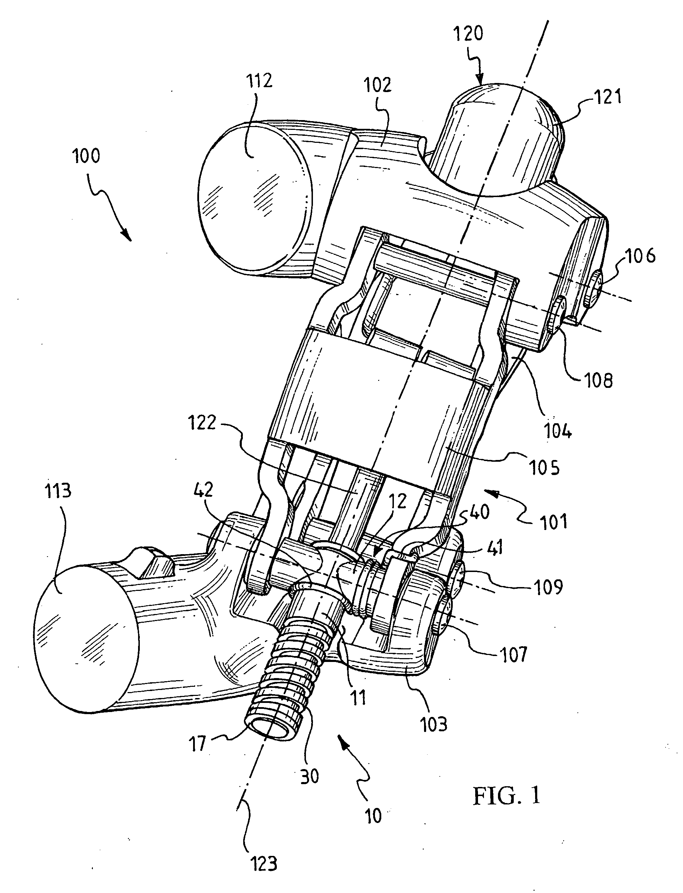

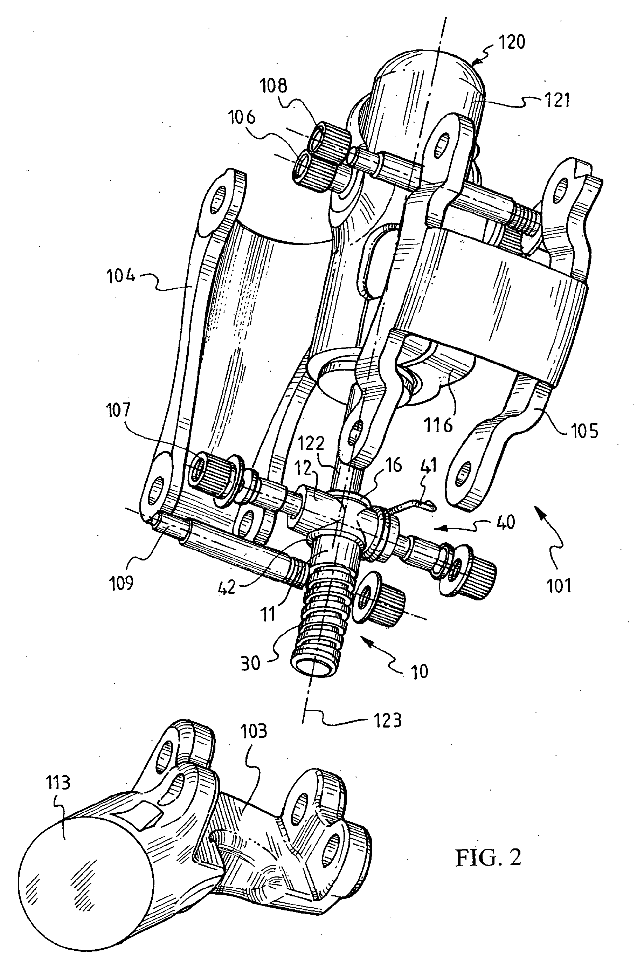

With particular reference to figures 1 and 2, an actuator device for a bicycle gearshift, particularly a rear gearshift, according to a first embodiment of the invention is indicated with 100.

The device 100 comprises an articulated quadrilateral actuation mechanism 101, more precisely an articulated parallelogram mechanism, intended to be moved by a motor member 120 and in turn to move a normal derailleur (not illustrated) of a rear gearshift of a bicycle. In alternative embodiments (not illustrated) the articulated quadrilateral can be a trapezium instead of a parallelogram.

The mechanism 101 comprises four connecting rods articulated together by four pin elements. The connecting rods comprise a first connecting rod 102 associated with a support 112 for attachment to a bicycle frame, a second connecting rod 103 opposite the first connecting rod 102 and associated with a support 113 for attachment of the derailleur, a third connecting rod 104 and a fourth connecting rod 105. The pin elements comprise a first pin element 106 (between the first and the third connecting rod 102 and 104), a second pin element 107 opposite the first (between the second and the fourth connecting rod 103 and 105), a third pin element 108 (between the first and the fourth connecting rod 102 and 105) and a fourth pin element 109 opposite the third (between the second and the third connecting rod 103 and 104).

A support 116 for the motor member 120 is associated with the first pin element 106. It should be noted that by the term "associated", referring to the support 116 in relation to the pin element, it is meant here and later on that the member in question is mechanically connected to the pin element, or else is formed integrally with it, or furthermore that such a member is configured in such a way as to be able to carry out the functions of the pin element. The motor member 120 comprises an electric motor 121 (supplied and controlled by means of control cables and members, not illustrated in the figures) provided with a threaded drive shaft (also called screw hereafter) 122, extending along a drive axis 123 and moved in rotation by the motor 121. In the illustrated example, the support 116 is substantially cradle-shaped, so as to be able to house the motor 121 with the drive axis 123 substantially at the axis of the pin 106.

The motor member 120 is coupled with the mechanism 101 by means of a nut 10, in screwing engagement with the screw 122 and associated with the second pin element 107. Through the nut 10 and the support 116, the motor member 120 is able to move the mechanism 101, making the diagonal between the pin elements 106 and 107 longer or shorter.

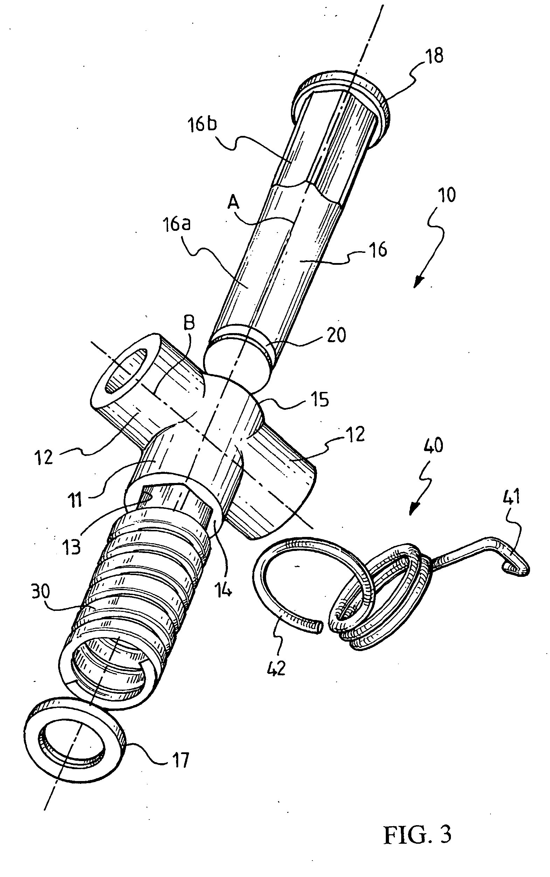

The nut 10 (better illustrated in figure 3) is in accordance with the cited European patent application n° 03425534.9 to the same Applicant; alternatively, a simpler nut can be provided, like for example the one described in the cited EP-A-1357023. The nut 10 comprises a tubular body 11 extending along an axis A and integral with two pin portions 12 that are identical, aligned and opposite to each other, extending along an axis B substantially perpendicular to the axis A. The pin portions 12 are integral with the tubular body 11 or preferably formed integrally with it. The tubular body 11 is provided with an inner recess 13 with a polygonal section, passing through and extending along the axis A between two annular abutment surfaces, a first abutment surface 14 and a second abutment' surface 15, formed at opposite ends of the tubular body 11.

The nut 10 also comprises a tubular sleeve 16, threaded internally with an inner threading matching the outer threading of the screw 122, so as to allow mesh engagement between the screw 122 and the nut 10. The sleeve 16 has a portion 16a with an externally circular section and a portion 16b with an externally polygonal section, matching the section of the inner recess 13, so as to allow the sleeve 16 inserted in the recess 13 of the tubular body 11 to be able to slide along the axis A but so that it cannot rotate around such an axis. The sleeve 16 is provided, at its opposite ends, with two projecting abutment collars, a first collar 17 and a second collar 18.

The first collar 17 is in the form of an annular washer, mounted on the circular portion 16a of the sleeve 16, in a respective groove 20 formed circumferentially on the outer surface of the sleeve 16. The second collar 18 is in the form of a projecting circular head of the portion 16b of the sleeve 16.

The nut 10 also comprises a spring 30, inserted on the sleeve 16. In conditions with the nut 10 mounted (figure 1), the sleeve 16 is inserted in the tubular body 11, with the second collar 18 abutting against the second abutment surface 15 and with the spring 30 compressed between the first abutment collar 17 and the first abutment surface 14.

The spring 30 illustrated as an example is a helical metal spring; instead of this a tubular elastomeric spring or any other spring capable of applying the same action in the nut 10 could be used.

The choice, sizing and compression of the spring 30 as well as assembly of the nut 10 are carried out depending upon the protective action that the nut 10 must provide inside the actuator device in which it is mounted, according to the teachings of the cited European patent application n° 03425534.9 to the same applicant.

The elastic yield of the nut 10 allows an elongation of the diagonal between the pin elements 106 and 107 even with the motor 121 off (or in any case a different elongation from that which the motor 121 would give). For such a purpose, the nut 10 is mounted by inserting the screw 122 into the sleeve 16 from the side of the second abutment collar 18: a possible knock will thus tend to compress the spring 30, making the sleeve 16 slide in the tubular body 11.

In accordance with the present invention, the mechanism 101 comprises friction control means between the screw 122 and the nut 10. Such means comprise a spring 40, acting between the connecting rod 105 and the nut 10; for such a purpose, the spring 40 comprises an end 41 with which it is hooked to the connecting rod 105 and an end 42 with which it is hooked to the nut 10, on the tubular body 11 thereof.

The spring 40 is preloaded, so as to angularly thrust upon the nut 10 in such direction to tend to make the nut 10 rotate around the axis B (coinciding with the axis of the pin 107), i.e. to tend to put the nut 10 out of alignment with respect to the drive axis 123. The aforementioned thrust of the spring 40 thus causes local pressure stresses between the screw 122 and the threaded sleeve 16 of the nut 10, with a consequent increase in the friction between such elements. The spring 40 is sized and in particular preloaded so that such friction is significant but low (in the sense clarified above). Thanks to this, the possible displacements between the screw 122 and the nut 10 due to possible vibrations to which the actuator 100 might be subjected are avoided or at least reduced.

Instead of the spring 40 that acts on the nut 10, it is possible to provide an analogous spring that acts on the screw 122, i.e. on the motor 120, thrusting it in an angular direction with respect to the axis of the pin 106 on which it is mounted. Given the length of the screw 122, such a solution requires that the used spring applies a much greater force than that required of the spring 40, to obtain the same effect.

As an alternative or in addition to the spring 40, the friction control means between the screw 122 and the nut 10 can comprise a specific surface treatment of the outer threading of the screw 122 and/or inner threading of the sleeve 16 of the nut 10. Such a treatment can, for example, be a stippling or even knurling, on one and/or other of the threadings.

Furthermore, as an alternative or in addition to the spring 40 and/or to the aforementioned surface treatment, the friction control means between the screw 122 and the nut 10 can comprise a special varnishing or resin application on one or both of the threadings; in such a way, in practice, a friction control material is placed between the two threadings.

The invention has been described with reference to a specific application on an actuator 100 for a rear gearshift. However, it is clear that it can equally be implemented on an actuator for a front gearshift, by acting in a totally similar way on the coupling between screw and nut.

## Claims

1. Actuator device (100) for a bicycle gearshift, comprising
- an articulated quadrilateral mechanism (101) with four connecting rods (102, 103, 104, 105) hinged together by four pin elements (106, 107, 108, 109), in which the first connecting rod (102) is intended to be fixed integrally to a bicycle frame, the second connecting rod (103) is opposite the first connecting rod (102) in the articulated quadrilateral (101) and is intended to be fixed to a support (113) for a derailleur of the gearshift;
- a motor member (120), having a variable length according to a drive axis (123) and acting between two opposite pin elements (106, 107) to move them towards and away from each other deforming the articulated quadrilateral (101);
wherein the motor member (120) comprises an electric motor (121) housed on a support (116) mounted on a first (106) of the pin elements, a screw (122) arranged axially along the drive axis (123) and moved in rotation by the electric motor (121), a nut (10) in mesh engagement with the screw (122) and fixed to a second (107) of the pin elements opposite the first (106),
**characterised in that** it comprises friction control means (40) between the screw (122) and the nut (10) so as to have a friction between the screw (122) and the nut (10) that is both sufficiently high as to effectively brake spontaneous displacements between the screw (122) and the nut (10) due to vibrations to which the bicycle is subjected, and sufficiently low as not to substantially impede normal operation of the actuator (100).

2. Device according to claim 1, wherein the friction control means comprise a surface treatment of the screw and/or of the nut.

3. Device according to claim 1, wherein the friction control means comprise a friction control material applied between the screw and the nut.

4. Device according to claim 1, wherein the friction control means comprise an elastic element (40) acting on one of the screw (122) and the nut (10) to angularly force the screw (122) and the nut (10) one with respect to the other.

5. Device according to claim 4, wherein the elastic element (40) acts between the nut (10) and one of said connecting rods (105).

6. Device according to claim 4, wherein the elastic element (40) acts between the motor element (120) and one of said connecting rods.

7. Device according to any one of claims 4 to 6, wherein said elastic element is a spring (40).

8. Device according to claim 7, wherein the spring (40) is preloaded.

## Patentansprüche

1. Aktuatoreinrichtung (100) für eine Fahrradgangschaltung, umfassend
- einen beweglichen vierseitigen Mechanismus (101) mit vier Verbindungsstangen (102, 103, 104, 105), die drehbar mittels vier Stiftelementen (106, 107, 108, 109) miteinander verbunden sind, wovon die erste Verbindungsstange (102) vorgesehen ist, integral an einem Fahrradrahmen fixiert zu sein, die zweite Verbindungsstange (103) sich gegenüber der ersten Verbindungsstange (102) in dem beweglichen Viereck (101) befindet und vorgesehen ist, um an einem Träger (113) für einen Umwerfer der Gangsschaltung fixiert zu sein,
- ein Motorelement (120), welches eine variable Länge entsprechend einer Antriebsachse (123) aufweist und zwischen zwei gegenüberliegenden Stiftelementen (106, 107) wirkt, um diese zueinander und weg von einander zu bewegen unter Verformung des beweglichen Vierecks (101),
wobei das Motorelement (120) einen Elektromotor (121), der an einem Halter (116) aufgenommen ist, der an einem ersten (106) der Stiftelemente montiert ist, eine Schraube (122), die axial entlang der Antriebsachse (123) angeordnet ist und durch den Elektromotor (121) in Rotation bewegt wird, und eine Mutter (10), die im kämmenden Eingriff mit der Schraube (122) steht und an einem zweiten (107) der Stiftelemente gegenüber dem Ersten (106) fixiert ist, umfasst,
**dadurch gekennzeichnet, dass** diese ein Reibungssteuermittel (40) zwischen der Schraube (122) und der Mutter (10) umfasst, um so eine Reibung zwischen der Schraube (122) und der Mutter (10) zu erhalten, die sowohl ausreichend hoch ist, um effektiv spontane Versätze zwischen der Schraube (122) und der Mutter (10) aufgrund von Vibrationen, welchen das Fahrrad ausgesetzt ist, zu bremsen, als auch ausreichend gering ist, um nicht wesentlich die normale Arbeitsweise des Aktuators (100) zu behindern.

2. Einrichtung nach Anspruch 1, wobei das Reibungssteuermittel eine Oberflächenbehandlung der Schraube und/oder der Mutter umfasst.

3. Einrichtung nach Anspruch 1, wobei das Reibungssteuermittel ein Reibungssteuermaterial umfasst, das zwischen der Schraube und der Mutter aufgebracht ist.

4. Einrichtung nach Anspruch 1, wobei das Reibungssteuermittel ein elastisches Element (40) umfasst, das an der Schraube (122) oder der Mutter (40) wirkt, um winklig die Schraube (122) und die Mutter (10) in Bezug zu einander zu zwingen.

5. Einrichtung nach Anspruch 4, wobei das elastische Element (40) zwischen der Mutter (10) und einer der Verbindungsstangen (105) wirkt.

6. Einrichtung nach Anspruch 4, wobei das elastische Element (40) zwischen dem Motorelement (120) und einer der Verbindungsstangen wirkt.

7. Einrichtung nach einem der Ansprüche 4 bis 6, wobei das elastische Element eine Feder (40) ist.

8. Einrichtung nach Anspruch 7, wobei die Feder (40) vorgespannt ist.

## Revendications

1. Dispositif d'actionneur (100) pour système de changement de vitesses de bicyclette, comprenant
- un mécanisme quadrilatéral articulé (101) comprenant quatre bielles (102, 103, 104, 105) articulées conjointement par quatre éléments de broche (106, 107, 108, 109), dans lesquels la première bielle (102) est destinée à être fixée d'un seul tenant sur un cadre de bicyclette, la seconde bielle (103) est opposée à la première bielle (102) dans le quadrilatère articulé (101) et est destinée à être fixée sur un support (113) d'un dérailleur du système de changement de vitesses;
- un élément de moteur (120), présentant une longueur variable selon un axe d'entraînement (123) et agissant entre deux éléments de broche (106, 107) opposés pour les rapprocher et les écarter l'un de l'autre en déformant le quadrilatère articulé (101) ;
dans lequel l'élément de moteur (120) comprend un moteur électrique (121) logé sur un support (116) monté sur un premier (106) des éléments de broche, une vis (122) agencée dans le sens axial le long de l'axe d'entraînement (123) et déplacée en rotation par le moteur électrique (121), un écrou (10) engrené avec la vis (122) et fixé sur un second (107) des éléments de broche opposé au premier (106),
**caractérisé en ce qu'**il comprend des moyens de commande de frottement (40) entre la vis (122) et l'écrou (10) de manière à présenter un frottement entre la vis (122) et l'écrou (10) qui est à la fois suffisamment important pour freiner efficacement les déplacements spontanés entre la vis (122) et l'écrou (10) dus aux vibrations auxquelles la bicyclette est soumise, et suffisamment faible pour ne pas entraver le fonctionnement normal de l'actionneur (100).

2. Dispositif selon la revendication 1, dans lequel les moyens de commande de frottement comprennent un traitement de surface de la vis et/ou de l'écrou.

3. Dispositif selon la revendication 1, dans lequel les moyens de commande de frottement comprennent un matériau de commande de frottement appliqué entre la vis et l'écrou.

4. Dispositif selon la revendication 1, dans lequel les moyens de commande de frottement comprennent un élément élastique (40) agissant sur un(e) parmi la vis (122) et l'écrou (10) pour pousser angulairement la vis (122) et l'écrou (10) l'un(e) par rapport à l'autre

5. Dispositif selon la revendication 4, dans lequel l'élément élastique (40) agit entre l'écrou (10) et une desdites bielles (105).

6. Dispositif selon la revendication 4, dans lequel l'élément élastique (40) agit entre l'élément de moteur (120) et une desdites bielles.

7. Dispositif selon l'une quelconque des revendications 4 à 6, dans lequel ledit élément élastique est un ressort (40).

8. Dispositif selon la revendication 7, dans lequel le ressort (40) est précontraint.
